# EUROPÄISCHE PATENTSCHRIFT

(11) **EP 3 982 104 B1**
(45) Veröffentlichungstag und Bekanntmachung des Hinweises auf die Patenterteilung: **02.08.2023**
(21) Anmeldenummer: 21194680.1
(22) Anmeldetag: 03.09.2021
(51) Int. Cl.: G01M 17/02, B60C 11/24

(54) **VORRICHTUNG ZUR VERMESSUNG EINES REIFENS**
DEVICE FOR MEASURING A TYRE
DISPOSITIF DE MESURE D'UN PNEU

(30) Priorität: 09.10.2020 DE 102020212813
(43) Veröffentlichungstag der Anmeldung: 13.04.2022
(73) Patentinhaber: Continental Reifen Deutschland GmbH, 30165 Hannover (DE)
(72) Erfinder: Lacayo-Pineda, Jorge, 30165 Hannover (DE); James, Akhil, 30165 Hannover (DE)
(74) Vertreter: Continental Corporation

(56) Entgegenhaltungen:
- WO-A1-2007/059935

## Beschreibung

Die Erfindung betrifft eine Vorrichtung, ein System und ein Verfahren zum Vermessen eines Reifens und einer elektromagnetisch reflektierenden Komponente des Reifens.

Die Erfindung geht aus von einer Vorrichtung zum Vermessen eines Reifens.

Dabei ist die Vorrichtung auch zur Vermessung einer elektromagnetisch reflektierenden Komponente geeignet.

Bei der elektromagnetisch reflektierenden Komponente kann es sich beispielsweise um einen Reifengürtel handeln. Die Vorrichtung ist insbesondere geeignet, einen Abstand von einer Oberfläche eines Kautschukbereichs des Reifens zu einem Festigkeitsträger des Reifens zu vermessen. Dabei ist der Festigkeitsträger unmittelbar an dem Kautschukbereich anliegend angeordnet oder der Festigkeitsträger wird von dem Kautschukbereich teilweise oder vollständig umschlossen. Bei dem Festigkeitsträger handelt es sich um eine elektromagnetisch reflektierende Komponente des Reifens, beispielsweise einen Reifengürtel.

Die Vorrichtung weist eine Messkomponente auf, wobei die Messkomponente zur Durchführung eines Laufzeitverfahrens vorgesehen ist. Die Vorrichtung weist weiter eine Auswertekomponente auf, wobei die Auswertekomponente zur Auswertung von mittels der Messkomponente gemessener Messgrößen vorgesehen ist.

Die Messkomponente weist ein Emissionselement und ein Detektionselement auf. Dabei ist das Emissionselement zur Aussendung elektromagnetischer Wellen in eine Emissionsrichtung vorgesehen. Das Detektionselement ist zum Erfassen der elektromagnetischen Wellen nach einer Reflektion der ausgesendeten elektromagnetischen Wellen an der elektromagnetisch reflektierenden Komponente vorgesehen.

Die Vorrichtung weist weiter eine Steuerungskomponente auf, wobei die Steuerungskomponente eingerichtet ist, mittels der Messkomponente das Laufzeitverfahren durchzuführen.

Bei der Steuerungskomponente handelt es sich insbesondere um eine elektrisch wirkende, elektromagnetisch wirkende oder elektronische Steuerungskomponente.

Aus dem Stand der Technik sind Vorrichtungen zum Vermessen eines Reifens und einer elektromagnetisch reflektierenden Komponente bekannt.

In der WO 2007/059935 A1 wird eine Vorrichtung zum Vermessen eines Reifens und einer elektromagnetisch reflektierenden Komponente des Reifens offenbart, aufweisend eine Messkomponente, wobei die Messkomponente zur Durchführung eines Laufzeitverfahrens vorgesehen ist, und aufweisend einer Auswertekomponente, wobei die Auswertekomponente zur Auswertung der mittels der Messkomponente gemessenen Messgrößen vorgesehen ist, wobei die Messkomponente ein Emissionselement und ein Detektionselement aufweist, wobei das Emissionselement zur Aussendung elektromagnetischer Wellen in eine Emissionsrichtung vorgesehen ist, und das Detektionselement zum Erfassen der elektromagnetischen Wellen nach einer Reflektion der ausgesendeten elektromagnetischen Wellen an der elektromagnetischen reflektierenden Komponente vorgesehen ist, und aufweisend eine Steuerungskomponente, wobei die Steuerungskomponente eingerichtet ist, mittels der Messkomponente das Laufzeitverfahren durchzuführen.

Bei den aus Stand der Technik bekannten Vorrichtungen handelt es sich insbesondere um solche Vorrichtungen, bei denen ein Reifen und seine Komponenten mittels eines kapazitiven oder induktiven Sensors vermessen werden. Die Vorrichtungen, die aus dem Stand der Technik bekannt sind, dienen insbesondere zur Bestimmung einer Laufstreifendicke des Reifens.

Die Laufstreifendicke kann mit einem Grad eines Reifenabriebs korreliert werden. Ein Reifenabrieb ist ein Effekt, der bei einem regulären Betrieb, also einem Abrollen des Reifens auf einer Fahrbahn, auftreten kann und der mit einem Verlust an Reifenmaterial einhergeht.

Die aus dem Stand der Technik bekannten Vorrichtungen, insbesondere solche, die eine Vermessung auf Grundlage eines Einsatzes eines kapazitiven oder induktiven Sensors vornehmen, könnten regelmäßig einen hohen Kalibrierungsaufwand erfordern.

Hintergrund des hohen Kalibrierungswandes sind die technisch-physikalischen Umstände, unter denen eine Messung mittels des kapazitiven oder des induktiven Sensors vorgenommen wird.

Bei den aus dem Stand der Technik bekannten Vorrichtungen könnte es zudem erforderlich sein, einen Reifen entlang seiner gesamten Laufstreifenlänge in seiner Umlaufrichtung zu vermessen. Die Umlaufrichtung ist die Richtung, in die ein Reifen während seines regulären Betriebs um eine Rotationsachse herum rotiert. Insbesondere könnte es erforderlich sein, einen definierten Abstand des Reifens zu der Vorrichtung zu bestimmen, um den Grad eines Abriebs eines Reifens zu ermitteln.

Der Einsatz der aus dem Stand der Technik bekannten Vorrichtungen könnte daher insgesamt sehr aufwändig sein.

Der Erfindung liegt daher die Aufgabe zugrunde, eine Vorrichtung bereitzustellen, mittels der auf einfache und technisch unaufwändige Weise ein Reifen sowie seine elektromagnetisch reflektierenden Komponenten vermessen werden können, um insbesondere einen Grad eines Abriebs des Reifens zu bestimmen.

Gelöst wird die erfindungsgemäß gestellte Aufgabe durch die Vorrichtung nach Anspruch 1.

Durch den erfindungsgemäßen Umstand, wonach die Vorrichtung einen Kontaktsensor aufweist, wobei der Kontaktsensor mit der Steuerungskomponente derart verbunden ist, dass Signale von dem Kontaktsensor an die Steuerungskomponente übertragen werden können, wobei der Kontaktsensor eingerichtet ist, ein Steuersignal an die Steuerungskomponente genau dann zu übertragen, wenn mittels des Kontaktsensors ein unmittelbarer physischer Kontakt erfasst wird, wobei die Steuerungskomponente eingerichtet ist, in Abhängigkeit des Steuersignals das Laufzeitverfahren mittels der Messkomponente durchzuführen, derart, dass ein Prüfabstand von der Messkomponente zu einer elektromagnetisch reflektierenden Komponente ermittelt werden kann, wird eine Vorrichtung bereitgestellt, deren Einsatz auf der Basis eines unmittelbaren physischen Kontakts einer Reifenoberfläche zu dem Kontaktsensor beruht. Anhand der Laufzeit der elektromagnetischen Wellen kann dann der Abstand der Vorrichtung zu der elektromagnetisch reflektierenden Komponente unmittelbar bestimmt werden. Dieser Abstand entspricht der Laufstreifendicke des Reifens.

Ein eventueller Abstand der Vorrichtung zu dem Reifen muss nicht berücksichtigt werden, ein möglicherweise mit der Berücksichtigung eines solchen Abstandes verbundener Kalibrierungsaufwand entfällt damit.

Dabei ist hingegen ein gegebenenfalls vorhandener Abstand der Messkomponente zu dem Kontaktsensor bekannt und bei einem durchzuführenden Laufzeitverfahren einfach zu berücksichtigen.

Die elektromagnetischen Wellen können sich nach Erfassung des physischen Kontaktes mittels des Kontaktsensors durch einen Bereich des Reifens bewegen und nach einer Reflektion an der elektromagnetisch reflektierenden Komponente zurück zu der Messkomponente gelangen. Dadurch, dass es sich um elektromagnetische Wellen handelt, kann die Messung während eines Überrollens des Reifens über die Vorrichtung vorgenommen werden. Hintergrund ist, dass die elektromagnetischen Wellen sich in dem Kautschukmaterial des Reifens mit annähernder Lichtgeschwindigkeit bewegen.

Somit wird eine unaufwändig einzusetzende und technisch einfachere Vorrichtung bereitgestellt.

Die Signale, die zwischen dem Kontaktsensor und der Steuerungskomponente der Vorrichtung übertragen werden, werden insbesondere mittels elektromagnetischer Wellen oder elektrisch übertragen.

Die Erfindung betrifft sich ferner ein System zur Vermessung von Reifen, wobei das System mindestens eine erfindungsgemäße Vorrichtung aufweist.

Die Erfindung betrifft weiter ein Verfahren nach Anspruch 7 zur Überwachung von Eigenschaften eines Reifens, wobei das Verfahren die folgenden Schritte aufweist:
- Bereitstellen eines erfindungsgemäßen Systems;
- Vermessung mindestens eines Reifens mittels des Systems;
- Ermitteln eines Prüfabstands mindestens eines Reifens;
- Übertragen einer Information über den Prüfabstand mindestens eines Reifens an einen externen Empfänger.

Bei dem Prüfabstand handelt es sich um die Laufstreifendicke eines Reifens. Die Laufstreifendicke des Reifens ist initial bekannt. Eine Betrachtung der Laufstreifendicke und ihrer Änderung kann zu einer quantitativen Aussage über einen Abrieb des Reifens führen.

Bei dem Reifen handelt es sich um einen PKW-Reifen, um einen LKW-Reifen oder um einen Zweirad-Reifen.

Bei dem externen Empfänger handelt es sich beispielsweise um eine Datenbank, eine Cloud oder einen Computer.

Weitere vorteilhafte Ausgestaltungsformen der vorliegenden Erfindung sind Gegenstand der Unteransprüche.

Gemäß einer vorzugsweisen Ausgestaltungsform der vorliegenden Vorrichtung handelt es sich bei den elektromagnetischen Wellen um Radarwellen, wobei die Radarwellen insbesondere in einem der folgenden Frequenzbereiche liegen:
- 2,4 GHz bis 2,5 GHz
- 5,725 GHz bis 5,875 GHz
- 24,00 GHz bis 24,05 GHz
- 24,05 GHz bis 24,25 GHz
- 25,25 GHz bis 25,50 GHz
- 25,5 GHz bis 26,5 GHz
- 26,5 GHz bis 27,0 GHz
- 34,2 GHz bis 34,7 GHz
- 59,0 GHz bis 59,3 GHz
- 59,3 GHz bis 64,0 GHz
- 76,0 GHz bis 77,5 GHz
- 78,0 GHz bis 79,0 GHz
- 79,0 GHz bis 81,0 GHz
- 116,0 GHz bis 122,25 GHz
- 122,25 GHz bis 123,0 GHz
- 244 GHz bis 246 GHz.

Durch den erfindungsgemäßen Umstand, wonach es sich bei den elektromagnetischen Wellen um Radarwellen handelt, wobei die Radarwellen insbesondere in einem der zuvorgenannten Frequenzbereich liegen, werden Radarwellen verwendet, mittels denen eine besonders effiziente Durchdringung des Kautschukmaterials des Reifens sichergestellt wird. Besonders bevorzugt ist ein Frequenzbereich der kleiner als 5 GHz ist.

Bei der Messkomponente handelt es sich gemäß der beanspruchten Erfindung um eine Radarkomponente.

Gemäß einer nächsten vorzugsweisen Ausgestaltungsform der vorliegenden Erfindung weist die Auswertekomponente ein Übertragungselement auf, wobei das Übertragungselement zur Übertragung einer Information über den Prüfabstand vorgesehen ist.

Bei dem Übertragungselement handelt es sich insbesondere um ein Übertragungselement, das Informationen und Signale mittels elektromagnetischer Wellen übertragen kann.

Gemäß der beanspruchten Vorrichtung weist der Kontaktsensor eine sensitive Oberfläche auf, wobei die sensitive Oberfläche zur Erfassung des unmittelbaren physischen Kontaktes vorgesehen ist und die sensitive Oberfläche für die elektromagnetischen Wellen durchlässig ist, wobei die Messkomponente auf der von dem Reifen abgewandten Seite unmittelbar neben dem Kontaktsensor liegt.

Gemäß einer nächsten vorzugsweisen Ausgestaltungsform des erfindungsgemäßen Systems weist das System eine Mehrzahl an Vorrichtungen auf, wobei die Vorrichtungen derart angeordnet sind, dass eine Mehrzahl an Reifen zeitgleich mit den Vorrichtungen vermessen werden kann.

Durch den erfindungsgemäßen Umstand, wonach das System eine Mehrzahl an Vorrichtungen erfindungsgemäßer Art aufweist, wobei die Vorrichtungen derart angeordnet sind, dass eine Mehrzahl an Reifen zeitgleich mit den Vorrichtungen vermessen werden kann, können beispielsweise mehrere Reifen, die an einer Achse eines LKW angeordnet sind, mittels des System vermessen werden.

Gemäß einer nächsten vorzugsweisen Ausgestaltungsform des erfindungsgemäßen Systems weist das System eine Erfassungsvorrichtung auf. Bei der Erfassungsvorrichtung handelt es sich beispielsweise um eine Kamera. Dabei ist die Erfassungsvorrichtung eingerichtet, eine Identifikationsinformation über ein Fahrzeug zu erfassen, dessen Reifen mittels des Systems vermessen werden und/oder die Erfassungsvorrichtung ist eingerichtet, eine Zuordnungsinformation über einen zu vermessenden Reifen am Fahrzeug zu erfassen.

Bei der Identifikationsinformation handelt es sich um eine solche Information, die dem Fahrzeug eineindeutig zuzuordnen ist.

Bei der Zuordnungsinformation handelt es sich um eine solche Information, die beispielsweise eine eindeutige Position des Reifens an dem Fahrzeug beschreibt.

Gemäß einer nächsten vorzugsweisen Ausgestaltungsform des erfindungsgemäßen Systems weist das System eine Übertragungsvorrichtung auf. Bei der Übertragungsvorrichtung handelt es sich beispielsweise um eine solche Übertragungsvorrichtung, die Signale mittels elektromagnetischer Wellen übertragen kann. Die Übertragungsvorrichtung ist geeignet, eine Information über Prüfabstände der Reifen zu übertragen und die Übertragungsvorrichtung ist ferner eingerichtet, eine Identifikationsinformation über das Fahrzeug zu übertragen und/oder eine Zuordnungsinformation über einen zu vermessenden Reifen am Fahrzeug zu übertragen.

Durch den erfindungsgemäßen Umstand, wonach das System eine Übertragungsvorrichtung aufweist, wobei die Übertragungsvorrichtung geeignet ist, eine Information über Prüfabstände der Reifen zu übertragen, und wobei die Übertragungsvorrichtung ferner eingerichtet ist, eine Identifikationsinformation über das Fahrzeug zu übertragen und/oder eine Zuordnungsinformation über einen zu vermessenden Reifen am Fahrzeug zu übertragen, kann mittels des Systems eine Information über einen Reifen eines bestimmten Fahrzeugs übermittelt werden. Dies ist insbesondere für den Fall eines LKW-Flottenmanagements von Bedeutung.

Gemäß einer nächsten vorzugsweisen Ausgestaltungsform des erfindungsgemäßen Verfahrens ist für den Fall, wonach das erfindungsgemäße System eine Erfassungsvorrichtung aufweist, das Verfahren derart ausgelegt, dass eine Identifikationsinformation über das Fahrzeug, an dem der mindestens eine Reifen angeordnet ist, zusammen mit der Information über den Prüfabstand des mindestens einen Reifens versendet wird und/oder eine Zuordnungsinformation über den mindestens einen Reifen am Fahrzeug zusammen mit der Information über den Prüfabstand des mindestens einen Reifens versendet wird.

Gemäß einer nächsten vorzugsweisen Ausgestaltungsform des erfindungsgemäßen Verfahrens wird eine Information über den Zeitpunkt, zu dem mindestens ein Reifen vermessen worden ist, zusammen mit der Information über den Prüfabstand des mindestens einen Reifens versendet. Bei der Information über den Zeitpunkt handelt es sich beispielsweise um eine Information über das Datum und die Uhrzeit, zu dem der mindestens eine Reifen vermessen worden ist.

Gemäß einer nächsten vorzugsweisen Ausgestaltungsform des erfindungsgemäßen Verfahrens wird eine Mehrzahl an Prüfabständen mindestens eines Reifens erfasst und eine Zeitreihenanalyse der Mehrzahl an Prüfabständen des mindestens eines Reifens durchgeführt, wobei basierend auf der Zeitreihenanalyse ein Grad eines Abriebs des Reifens bestimmt wird.

Über eine Zeitdauer und mehrere Vermessungen des Reifens hinweg kann somit die Abnutzung des Reifens im Mittel bestimmt werden. Es ist dabei nicht erforderlich, dass der gesamte Reifen bei jeder Messung um 360° entlang seiner Lauffläche vermessen wird.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1:: Eine schematische Darstellung einer erfindungsgemäßen Vorrichtung;
- Fig. 2:: eine schematische Darstellung eines erfindungsgemäßen Systems.

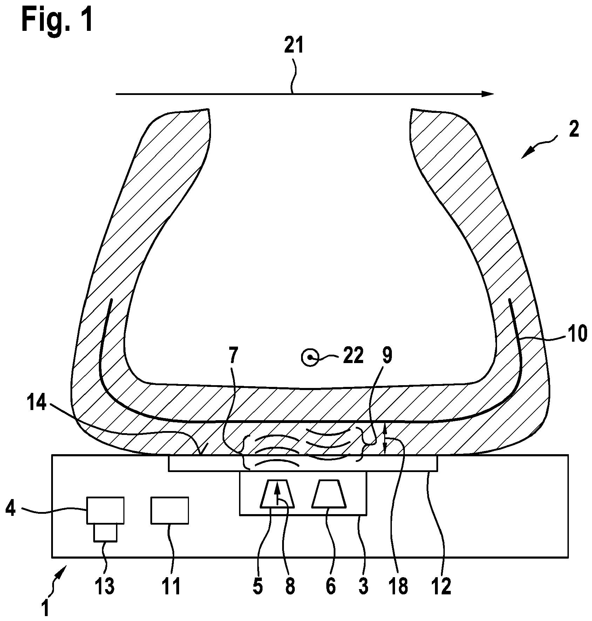

In der Figur 1 ist eine erfindungsgemäße Vorrichtung 1 zum Vermessen eines Reifens 2 und einer elektromagnetisch reflektierenden Komponente 10 des Reifens 2 schematisch dargestellt. Der Reifen 2 ist dabei in Radialschnittansicht dargestellt und um eine Rotationsachse 21 in eine Umlaufrichtung 22 rotierbar. Die Vorrichtung 1 weist eine Messkomponente 3 auf. Die Messkomponente 3 ist zur Durchführung eines Laufzeitverfahrens vorgesehen. Die Vorrichtung 1 weist ferner eine Auswertekomponente 4 auf, wobei die Auswertekomponente 4 zur Auswertung von mittels der Messkomponente 3 gemessener Messgrößen vorgesehen ist. Die Messkomponente 3 weist ein Emissionselement 5 und ein Detektionselement 6 auf. Das Emissionselement 5 ist zur Aussendung elektromagnetischer Wellen 7 in eine Emissionsrichtung 8 vorgesehen. Das Detektionselement 6 ist zum Erfassen der elektromagnetischen Wellen 9 nach einer Reflektion der ausgesendeten elektromagnetischen Wellen 7 an der elektromagnetisch reflektierenden Komponente 10 vorgesehen. Die Vorrichtung 1 weist ferner eine Steuerungskomponente 11 auf, wobei die Steuerungskomponente 11 eingerichtet ist, mittels der Messkomponente 3 das Laufzeitverfahren durchzuführen.

Die Vorrichtung weist ferner einen Kontaktsensor 12 auf.

Der Kontaktsensor 12 ist mit der Steuerungskomponente 11 derart verbunden, dass Signale von dem Kontaktsensor 12 an die Steuerungskomponente 11 übertragen werden können, wobei der Kontaktsensor 12 eingerichtet ist, ein Steuersignal an die Steuerungskomponente 11 genau dann zu übertragen, wenn mittels des Kontaktsensors 12 ein unmittelbarer physischer Kontakt erfasst wird, wobei die Steuerungskomponente 11 eingerichtet ist, in Abhängigkeit des Steuersignals das Laufzeitverfahren mittels der Messkomponente 3 durchzuführen, derart, dass ein Prüfabstand 18 von der Messkomponente 3 zu einer elektromagnetisch reflektierenden Komponente 10 ermittelt werden kann. Ein eventueller Grundabstand zwischen der Messkomponente 3 und dem Kontaktsensor 12, müsste bei der Durchführung des Laufzeitverfahrens und der Berechnung der Werte des Prüfabstands 18 berücksichtigt werden. Gemäß der in der Figur 1 schematisch dargetselten Ausführungsform liegt die Messkomponente 3 unmittelbar neben dem Kontaktsensor 12.

Die Übertragung zwischen dem Kontaktsensor 12 und der Steuerungskomponente 11 kann insbesondere elektrisch oder elektromagnetisch sein.

Insbesondere weist die Auswertekomponente 4 ein Übertragungselement 13 auf, wobei das Übertragungselement 13 zur Übertragung einer Information über den Prüfabstand 18 vorgesehen ist.

Wie gemäß der beanspruchten Erfindung in Fig. 1 dargestellt, weist der Kontaktsensor 12 eine sensitive Oberfläche 14 auf. Die sensitive Oberfläche 14 ist zur Erfassung des unmittelbaren physischen Kontaktes vorgesehen und die sensitive Oberfläche 14 ist für die elektromagnetischen Wellen 7, 9 (Radarwellen) durchlässig

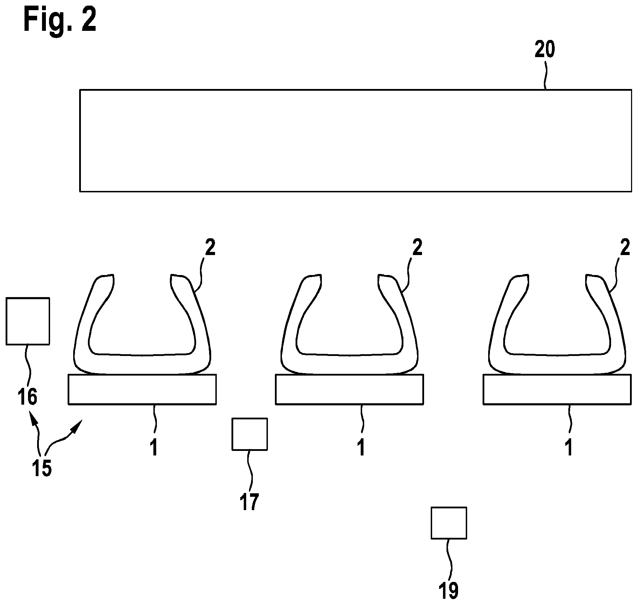

In der Figur 2 ist eine erfindungsgemäßes System 15 schematisch dargestellt. Gemäß der Darstellung in der Figur 2 weist das System 15 eine Mehrzahl erfindungsgemäßer Vorrichtungen 1 auf. Dabei ist die Mehrzahl der Vorrichtungen 1 derart angeordnet, dass eine Mehrzahl an Reifen 2 zeitgleich mit den Vorrichtungen 1 vermessen werden kann.

Der Reifen 2 sind an einem schematisch dargestellten Fahrzeug 20 angeordnet. Das Fahrzeug 20 ist kein Bestandteil des Systems.

Gemäß der in der Figur 2 dargestellten Ausführungsform des erfindungsgemäßen Systems 15 weist das System 15 eine Erfassungsvorrichtung 16 auf, dabei ist die Erfassungsvorrichtung 16 eingerichtet, eine Identifikationsinformation über das Fahrzeug 20 zu erfassen. Die Erfassungsvorrichtung 16 kann ferner eingerichtet sein, eine Zuordnungsinformation über einen zu vermessenden Reifen 2 am Fahrzeug 20 zu erfassen.

Ferner weist das System 15, gemäß der in der Figur 2 schematisch dargestellten Ausführungsform, eine Übertragungsvorrichtung 17 auf, wobei die Übertragungsvorrichtung 17 geeignet ist, eine Information über Prüfabstände 18 der Reifen 2 zu übertragen und wobei die Übertragungsvorrichtung 17 ferner eingerichtet ist, eine Identifikationsinformation über das Fahrzeug 20 an einen externen Empfänger 19 zu übertragen und/oder eine Zuordnungsinformation über einen zu vermessenden Reifen 2 am Fahrzeug 20 an den externen Empfänger 19 zu übertragen. Der externe Empfänger 19 ist kein Bestandteil des Systems 1.

### Bezugszeichenliste

### (ist Teil der Beschreibung)

- 1: Vorrichtung
- 2: Reifen
- 3: Messkomponente
- 4: Auswertekomponente
- 5: Emissionselement
- 6: Detektionselement
- 7: elektromagnetische Wellen
- 8: Emissionsrichtung
- 9: reflektierte elektromagnetische Wellen
- 10: elektromagnetisch reflektierende Komponente
- 11: Steuerungskomponente
- 12: Kontaktsensor
- 13: Übertragungselement
- 14: sensitive Oberfläche
- 15: System
- 16: Erfassungsvorrichtung
- 17: Übertragungsvorrichtung
- 18: Prüfabstand
- 19: Externer Empfänger
- 20: Fahrzeug
- 21: Rotationsachse
- 22: Umlaufrichtung

## Patentansprüche

1. Vorrichtung (1) zum Vermessen eines Reifens (2) und einer elektromagnetisch reflektierenden Komponente (10) des Reifens (2), aufweisend eine Messkomponente (3), wobei die Messkomponente (3) zur Durchführung eines Laufzeitverfahrens vorgesehen ist, und aufweisend eine Auswertekomponente (4), wobei die Auswertekomponente (4) zur Auswertung von mittels der Messkomponente (3) gemessener Messgrößen vorgesehen ist, wobei die Messkomponente (3) ein Emissionselement (5) und ein Detektionselement (6) aufweist, wobei das Emissionselement (5) zur Aussendung elektromagnetischer Wellen (7) in eine Emissionsrichtung (8) vorgesehen ist und das Detektionselement (6) zum Erfassen der elektromagnetischen Wellen (9) nach einer Reflektion der ausgesendeten elektromagnetischen Wellen (7) an der elektromagnetisch reflektierenden Komponente (10) vorgesehen ist, und aufweisend eines Steuerungskomponente (11), wobei die Steuerungskomponente (11) eingerichtet ist, mittels der Messkomponente (3) das Laufzeitverfahren durchzuführen, wobei die Vorrichtung (1) einen Kontaktsensor (12) aufweist, wobei der Kontaktsensor (12) mit der Steuerungskomponente (11) derart verbunden ist, dass Signale von dem Kontaktsensor (12) an die Steuerungskomponente (11) übertragen werden können, wobei der Kontaktsensor (12) eingerichtet ist, ein Steuersignal an die Steuerungskomponente (11) genau dann zu übertragen, wenn mittels des Kontaktsensors (12) ein unmittelbarer physischer Kontakt erfasst wird, wobei die Steuerungskomponente (11) eingerichtet ist, in Abhängigkeit des Steuersignals das Laufzeitverfahren mittels der Messkomponente (3) durchzuführen, derart, dass ein Prüfabstand (18) von der Messkomponente (3) zu einer elektromagnetisch reflektierenden Komponente (10) ermittelt werden kann, wobei es sich bei den elektromagnetischen Wellen (7, 9) um Radarwellen handelt, wobei der Kontaktsensor (12) eine sensitive Oberfläche (14) aufweist, wobei die sensitive Oberfläche (14) zur Erfassung des unmittelbaren physischen Kontaktes vorgesehen ist, **dadurch gekennzeichnet, dass** die sensitive Oberfläche (14) für die elektromagnetischen Wellen (7, 9) durchlässig ist, wobei die Messkomponente (3) auf der von dem Reifen (2) abgewandten Seite unmittelbar neben dem Kontaktsensor (12) liegt.

2. Vorrichtung (1) nach einem der vorhergehenden Ansprüche, **dadurch gekennzeichnet, dass** die Auswertekomponente (4) ein Übertragungselement (13) aufweist, wobei das Übertragungselement (13) zur Übertragung einer Information über den Prüfabstand (18) vorgesehen ist.

3. System (15) zur Vermessung von Reifen, aufweisend mindestens eine Vorrichtung
(1) gemäß einem der vorhergehenden Ansprüche.

4. System (15) nach dem vorhergehenden Anspruch, aufweisend eine Mehrzahl an Vorrichtungen (1) gemäß einem der Ansprüche 1 bis 2, **dadurch gekennzeichnet, dass** die Vorrichtungen (1) derart angeordnet sind, dass eine Mehrzahl an Reifen (2) zeitgleich mit den Vorrichtungen (1) vermessen werden kann.

5. System (15) nach Anspruch 3 oder 4, **dadurch gekennzeichnet, dass** das System (15) eine Erfassungsvorrichtung (16) aufweist, wobei die Erfassungsvorrichtung (16) eingerichtet ist, eine Identifikationsinformation über ein Fahrzeug (20) zu erfassen, dessen Reifen (2) mittels des Systems (15) vermessen werden und/oder wobei die Erfassungsvorrichtung (16) eingerichtet ist, eine Zuordnungsinformation über einen zu vermessenden Reifen (2) am Fahrzeug (20) zu erfassen.

6. System (15) nach einem der Ansprüche 3 bis 5, **dadurch gekennzeichnet, dass** das System (15) eine Übertragungsvorrichtung (17) aufweist, wobei die Übertragungsvorrichtung (17) geeignet ist, eine Information über Prüfabstande (18) der Reifen (2) zu übertragen und wobei die Übertragungsvorrichtung (17) ferner eingerichtet ist, eine Identifikationsinformation über das Fahrzeug (20) zu übertragen und/oder eine Zuordnungsinformation über einen zu vermessenden Reifen (2) am Fahrzeug (20) zu übertragen.

7. Verfahren zur Überwachung von Eigenschaften eines Reifens (2), aufweisend die folgenden Schritte:
- Bereitstellen eines Systems (15) nach einem der Ansprüche 3 bis 6;
- Vermessung mindestens eines Reifens (2) mittels des Systems (15);
- Ermitteln eines Prüfabstands (18) mindestens eines Reifens (2);
- Übertragen einer Information über den Prüfabstand (18) mindestens eines Reifens (2) an einen externen Empfänger (19).

8. Verfahren nach dem vorhergehenden Anspruch, **dadurch gekennzeichnet, dass** das System (15) eine Erfassungsvorrichtung (16) aufweist und eine Identifikationsinformation über das Fahrzeug (20), an der mindestens eine Reifen (2) angeordnet ist, zusammen mit der der Information über den Prüfabstand (18) des mindestens einen Reifens (2) versendet wird und/oder eine Zuordnungsinformation über den mindestens einen Reifen (2) am Fahrzeug (20) zusammen mit der Information über den Prüfabstand (18) des mindestens einen Reifens (2) versendet wird.

9. Verfahren nach Anspruch 7 oder 8, **dadurch gekennzeichnet, dass** eine Information über den Zeitpunkt, zu dem mindestens ein Reifen (2) vermessen worden ist, zusammen mit der Information über den Prüfabstand (18) des mindestens einen Reifens (2) versendet wird.

10. Verfahren nach einem der Ansprüche 7 bis 9, **dadurch gekennzeichnet, dass** eine Mehrzahl an Prüfabständen (18) mindestens eines Reifens (2) erfasst wird und eine Zeitreihenanalyse der Mehrzahl an Prüfabständen (18) des mindestens einen Reifens (2) durchgeführt wird, wobei basierend auf der Zeitreihenanalyse ein Grad eines Abriebs des Reifens (2) bestimmt wird.

## Claims

1. Device (1) for measuring a tyre (2) and an electromagnetically reflective component (10) of the tyre (2), comprising a measuring component (3), the measuring component (3) being provided for carrying out a time-of-flight method, and comprising an evaluation component (4), the evaluation component (4) being provided for evaluating measurement variables measured by means of the measuring component (3), the measuring component (3) comprising an emission element (5) and a detection element (6), the emission element (5) being provided for emitting electromagnetic waves (7) in an emission direction (8) and the detection element (6) being provided for detecting the electromagnetic waves (9) after a reflection of the emitted electromagnetic waves (7) at the electromagnetically reflective component (10), and comprising a control component (11), the control component (11) being configured to carry out the time-of-flight method by means of the measuring component (3), the device (1) comprising a contact sensor (12), the contact sensor (12) being connected to the control component (11) in such a way that signals can be transmitted from the contact sensor (12) to the control component (11), the contact sensor (12) being configured to transmit a control signal to the control component (11) exactly when direct physical contact is detected by means of the contact sensor (12), the control component (11) being configured to carry out the time-of-flight method by means of the measuring component (3) depending on the control signal in such a way that a test distance (18) from the measuring component (3) to an electromagnetically reflective component (10) can be ascertained, the electromagnetic waves (7, 9) being radar waves, the contact sensor (12) comprising a sensitive surface (14), the sensitive surface (14) being provided for detecting the direct physical contact, **characterized in that** the sensitive surface (14) is transmissive to the electromagnetic waves (7, 9), the measuring component (3) lying directly next to the contact sensor (12) on the side facing away from the tyre (2).

2. Device (1) according to any of the preceding claims, **characterized in that** the evaluation component (4) comprises a transmission element (13), the transmission element (13) being provided for transmitting information about the test distance (18).

3. System (15) for measuring tyres, comprising at least one device (1) according to either of the preceding claims.

4. System (15) according to the preceding claim, comprising a plurality of devices (1) according to either of Claims 1 and 2, **characterized in that** the devices (1) are arranged in such a way that a plurality of tyres (2) can be measured simultaneously by means of the devices (1).

5. System (15) according to Claim 3 or 4, **characterized in that** the system (15) comprises a capture device (16), the capture device (16) being configured to capture identification information about a vehicle (20), the tyres (2) of which are measured by means of the system (15), and/or the capture device (16) being configured to capture assignment information about a tyre (2) to be measured on the vehicle (20).

6. System (15) according to any of Claims 3 to 5, **characterized in that** the system (15) comprises a transmission device (17), the transmission device (17) being suitable for transmitting information about test distances (18) of the tyres (2), and the transmission device (17) furthermore being configured to transmit identification information about the vehicle (20) and/or to transmit assignment information about a tyre (2) to be measured on the vehicle (20).

7. Method for monitoring properties of a tyre (2), comprising the following steps:
- providing a system (15) according to any of Claims 3 to 6;
- measuring at least one tyre (2) by means of the system (15);
- ascertaining a test distance (18) of at least one tyre (2);
- transmitting information about the test distance (18) of at least one tyre (2) to an external receiver (19).

8. Method according to the preceding claim, **characterized in that** the system (15) comprises a capture device (16) and identification information about the vehicle (20) on which at least one tyre (2) is arranged is sent together with the information about the test distance (18) of the at least one tyre (2) and/or assignment information about the at least one tyre (2) on the vehicle (20) is sent together with the information about the test distance (18) of the at least one tyre (2).

9. Method according to Claim 7 or 8, **characterized in that** information about the point in time at which at least one tyre (2) was measured is sent together with the information about the test distance (18) of the at least one tyre (2).

10. Method according to any of Claims 7 to 9, **characterized in that** a plurality of test distances (18) of at least one tyre (2) are captured and a time series analysis of the plurality of test distances (18) of the at least one tyre (2) is carried out, a degree of abrasion of the tyre (2) being determined on the basis of the time series analysis.

## Revendications

1. Dispositif (1) permettant de mesurer un pneu (2) et un composant à réflexion électromagnétique (10) du pneu (2), présentant un composant de mesure (3), le composant de mesure (3) étant prévu pour effectuer un procédé de temps de propagation, et présentant un composant d'évaluation (4), le composant d'évaluation (4) étant prévu pour évaluer des grandeurs de mesure mesurées au moyen du composant de mesure (3), dans lequel le composant de mesure (3) présente un élément d'émission (5) et un élément de détection (6), dans lequel l'élément d'émission (5) est prévu pour émettre des ondes électromagnétiques (7) dans une direction d'émission (8), et l'élément de détection (6) est prévu pour détecter les ondes électromagnétiques (9) après une réflexion des ondes électromagnétiques (7) émises au niveau du composant à réflexion électromagnétique (10), et présentant un composant de commande (11), le composant de commande (11) étant conçu pour effectuer au moyen du composant de mesure (3) le procédé de temps de propagation, dans lequel le dispositif (1) présente un capteur de contact (12), dans lequel le capteur de contact (12) est relié au composant de commande (11) de telle sorte que des signaux peuvent être transmis du capteur de contact (12) au composant de commande (11), dans lequel le capteur de contact (12) est conçu pour transmettre un signal de commande au composant de commande (11) exactement quand un contact physique direct est détecté au moyen du capteur de contact (12), dans lequel le composant de commande (11) est conçu pour effectuer le procédé de temps de propagation en fonction du signal de commande, au moyen du composant de mesure (3) de telle sorte qu'une distance de contrôle (18) du composant de mesure (3) à un composant à réflexion électromagnétique (10) peut être établie, dans lequel les ondes électromagnétiques (7, 9) sont des ondes radar, dans lequel le capteur de contact (12) présente une surface sensible (14), la surface sensible (14) étant prévue pour la détection du contact physique directe,
**caractérisé en ce que** la surface sensible (14) laisse passer les ondes électromagnétiques (7, 9), dans lequel le composant de mesure (3) se trouve sur le côté détourné du pneu (2) directement à côté du capteur de contact (12).

2. Dispositif (1) selon l'une quelconque des revendications précédentes, **caractérisé en ce que** le composant d'évaluation (4) présente un élément de transmission (13), dans lequel l'élément de transmission (13) est prévu pour transmettre une information concernant la distance de contrôle (18).

3. Système (15) permettant de mesurer un pneu, présentant au moins un dispositif (1) selon l'une quelconque des revendications précédentes.

4. Système (15) selon la revendication précédente, présentant une pluralité de dispositifs (1) selon l'une quelconque des revendications 1 à 2, **caractérisé en ce que** les dispositifs (1) sont disposés de telle sorte qu'une pluralité de pneus (2) peut être mesurée en même temps par les dispositifs (1).

5. Système (15) selon la revendication 3 ou 4, **caractérisé en ce que** le système (15) présente un dispositif de détection (16), dans lequel le dispositif de détection (16) est conçu pour détecter une information d'identification concernant un véhicule (20) dont les pneus (2) sont mesurés au moyen du système (15), et/ou dans lequel le dispositif de détection (16) est conçu pour détecter une information d'association concernant un pneu (2) à mesurer sur le véhicule (20).

6. Système (15) selon l'une quelconque des revendications 3 à 5, **caractérisé en ce que** le système (15) présente un dispositif de transmission (17), dans lequel le dispositif de transmission (17) est adapté pour transmettre une information concernant des distances de contrôle (18) des pneus (2), et dans lequel le dispositif de transmission (17) est en outre conçu pour transmettre une information d'identification concernant le véhicule (20) et/ou pour transmettre une information d'association concernant un pneu (2) à mesurer sur le véhicule (20).

7. Procédé permettant de surveiller les propriétés d'un pneu (2), présentant les étapes suivantes consistant à :
- fournir un système (15) selon l'une quelconque des revendications 3 à 6;
- mesurer au moins un pneu (2) au moyen du système (15) ;
- établir une distance de contrôle (18) d'au moins un pneu (2) ;
- transmettre une information concernant la distance de contrôle (18) d'au moins un pneu (2) à un récepteur externe (19).

8. Procédé selon la revendication précédente, **caractérisé en ce que** le système (15) présente un dispositif de détection (16) et une information d'identification concernant le véhicule (20) sur lequel est disposé au moins un pneu (2) est envoyée avec l'information concernant la distance de contrôle (18) du au moins un pneu (2), et/ou une information d'association concernant ledit au moins un pneu (2) sur le véhicule (20) est envoyée avec l'information concernant la distance de contrôle (18) du au moins un pneu (2).

9. Procédé selon la revendication 7 ou 8, **caractérisé en ce qu'**une information concernant le temps où ledit au moins un pneu (2) a été mesuré est envoyée avec l'information concernant la distance de contrôle (18) du au moins un pneu (2).

10. Procédé selon l'une quelconque des revendications 7 à 9, **caractérisé en ce qu'**une pluralité de distances de contrôle (18) d'au moins un pneu (2) est détectée, et une analyse chronologique de la pluralité de distances de contrôle (18) du au moins un pneu (2) est effectuée, dans lequel un degré d'usure du pneu (2) est déterminé sur la base de l'analyse chronologique.
